# EUROPEAN PATENT APPLICATION

(11) **EP 2 416 005 A1**
(43) Date of publication of application: **08.02.2012**
(21) Application number: 10171592.8
(22) Date of filing: 02.08.2010
(51) Int. Cl.: F03D 1/06, F03D 11/00

(54) **Lightning protection of a wind turbine blade**

(71) Applicant: SIEMENS AKTIENGESELLSCHAFT, 80333 München (DE)
(72) Inventor: Lewke, Bastian, 7400, Herning (DK); Olsen, Kaj, 8240, Riiskov (DK)

(57) **Abstract**

The invention relates to an arrangement for a lightning protection of a wind turbine blade.

According to the invention the blade of the wind turbine is extended by a shaped winglet. The blade contains a lightning receptor, which is arranged at the tip end region of the blade. The winglet contains an additional lightning receptor.

## Description

The invention relates to an arrangement for a lightning protection of a wind turbine blade.

Document US 7540716 B2 describes a rotor blade, which is shaped in a specific way to reduce sound emissions. The shape of the tip end of the blade is curved or angled in the direction of the pressure side of the blade. For this purpose a so called "edge arc"-component is used. The component is arranged at the tip end of the blade. The shaped tip might comprise metal and thus might be used as lightning conductor, too.

The configuration described above is expensive, if the tip end is made of metal instead of glass-fiber, which is commonly used for wind turbine blades.

Even when the tip end is designed to act as lightning conductor the metal-made blade-extension might not prevent other parts of the blade to be hit by lightning strikes.

It is therefore the aim of the invention to provide an improved arrangement for a lightning protection of a wind turbine blade.

This aim is achieved by the features of claim 1. Preferred configurations of the invention are object of the dependant claims.

According to the invention the blade of the wind turbine is extended by a shaped winglet. The blade contains a lightning receptor, which is arranged at the tip end region of the blade. The winglet contains an additional lightning receptor.

Preferably the winglet is arranged at or even close to the tip end region of the blade.

Preferably the winglet is shaped in a way that a lift/drag-ratio of the blade is optimized. Due to the winglet the turning blade show less resistance in view to its turning moment thus the efficiency of the wind turbine is increased.

According to the invention a lightning receptor or a number of lightning receptors is/are placed at the tip end region of the blade. This region is the most relevant part of the blade in view to lighting strikes.

According to the invention an additional lightning receptor or a number of additional lightning receptors is/are arranged asides the winglet, as the winglet affects the tip end region of the blade too.

Preferably the lightning receptor is placed at the winglet at a specific region where so called "negative pressure-vortexes" are generated.

"Negative pressure-vortexes" are vortexes which are generated asides the suction side of the winglet or blade for example.

Preferably the position of the lightning receptors of the blade and the position of the lightning receptors of the winglet are jointly optimized.

For example the lightning receptors of a first blade, which is designed for a use without a winglet, are arranged at the same position as the lightning receptors of a second blade, which is designed for a use with a winglet.

Thus already mounted blades can be retrofitted by winglets if this is issued by the specific situation of the wind turbine site.

The lightning receptors ensure that the lightning current, being issued by the lightning strike, gets a hold without damaging the surround part of the blade.

Preferably the lightning receptors are attached to a lightning conductor, which leads the lightning current to the ground.

The positions of the lightning receptors, especially the position of the lightning receptors of the winglet part, are optimized by help of well-known computer-simulations.

These simulations are based on pressure conditions, which results along the blade due to the shaped winglet and due to the shaped blade itself.

It has to be noticed that for this invention each lightning receptor may be placed preferably into an opening of the winglet/blade.

The opening may be introduced into the blade/winglet after the manufacturing process of the blade. Thus the winglet/blade may be retrofitted with the receptor if needed within the appropriate opening.

The opening itself may also be arranged or provided asides the blade/winglet during the manufacturing process.

It is also possible that each lightning receptor may be cast into the winglet/blade during the manufacturing of the blade/winglet. Thus the receptor is an integrated part of the wind turbine after the manufacturing of the blade/winglet.

Even combinations of these two arrangements are within the scope of the invention.

Additionally it has to be noticed that for this invention the lightning receptor penetrates the blade/winglet. Thus the lightning receptor of the blade/winglet contains a first and a second surface, while the first surface of the lightning receptor is arranged at a first surface of the blade or winglet and while the second surface of the lightning receptor is arranged at a second surface of the blade or winglet.

Both surfaces of the lightning receptor are designed and arranged in a way, that each surface is able to withstand an incoming lightning strike and to pass on the resulting lightning energy towards an electric ground of the wind turbine.

The invention is described in more detail now by help of some figures.

The figures show preferred configurations and are not intended to limit the scope of the invention.
- FIG 1: shows a lightning protection according to the invention for a first winglet-type,
- FIG 2: shows a lightning protection according to the invention for a second winglet-type,
- FIG 3: shows a lightning protection according to the invention for a third winglet-type,
- FIG 4: shows a cross section of a tip end of a blade, which is connected with a one-sided winglet, while the winglet is oriented in an upstream direction of the blade,
- FIG 5: shows a cross section of a tip end of a blade, which is connected with a two-sided winglet, while the winglet is asymmetric and is oriented in an upstream direction of the blade,
- FIG 6: shows a cross section of a tip end of a blade, which is connected with a one-sided winglet, while the winglet is oriented in an downstream direction of the blade,
- FIG 7: shows a cross section of a tip end of a blade, which is connected with a two-sided winglet, while the winglet is symmetric and is oriented in an upstream direction of the blade, and
- FIG 8: shows a cross section of a tip end of a blade, which is connected with a two-sided winglet, while the winglet is asymmetric and is oriented in an downstream direction of the blade.

For the figures the phrase "upstream" or "upwind" refers to the direction of the incoming wind. Thus a pointer of this direction would point against the incoming wind.

For the figures the phrase "downstream" or "downwind" refers to the direction of the wind, passing the blade. Thus a pointer of this direction would point along and in line with the wind passing the blade.

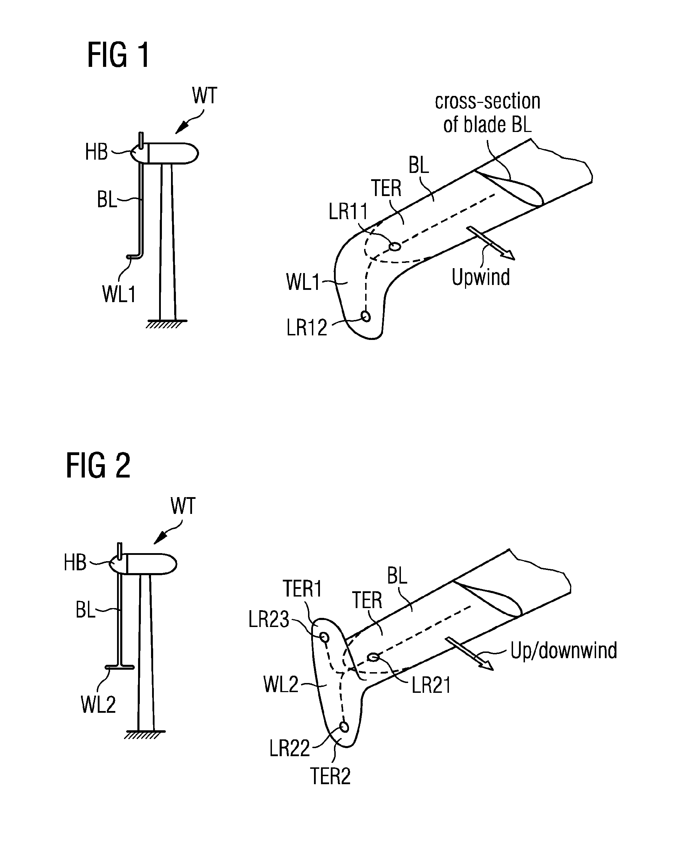

**FIG 1** shows a lightning protection according to the invention for a first winglet-type.

The blade BL turns around the hub HB of the wind turbine WT.

The blade BL is extended by a winglet WL1, which is arranged close to the tip end region TER of the blade BL.

The winglet WL1 is shaped as a one-sided winglet.

The winglet WL1 is oriented into the incoming wind-direction of the wind turbine WT, thus the winglet WL1 is called "one sided upstream winglet".

A lightning receptor LR11 is arranged close to the tip end region TER of the blade BL.

An additional lightning receptor LR12 is arranged asides the winglet WL1.

The position of this lightning receptor LR12 might be even close to the tip end region TER of the winglet WL1.

The lightning receptors LR11 and LR12 are connected with a lightning conductor, which leads the lightning current to the ground.

**FIG 2** shows a lightning protection according to the invention for a second winglet-type.

The blade BL turns around the hub HB of the wind turbine WT.

The blade BL is extended by a winglet WL2, which is arranged close to the tip end region TER of the blade BL.

The winglet WL2 is shaped as a so called "two-sided winglet". The winglet WL2 is thus oriented into two directions: into the upstream (that is the direction of the incoming wind) and into the downstream (that is the direction of the wind after it passed the blade).

The winglet WL2 might be shaped asymmetric or symmetric. FIG 2 shows the symmetric version.

A lightning receptor LR21 is arranged close to the tip end region TER of the blade BL.

Two additional lightning receptors LR22 and LR23 are arranged asides the winglet WL2.

The position of the lightning receptors LR22 and LR23 might be even close to the tip end regions TER1 and TER2 of the winglet WL2.

The lightning receptors LR21, LR22 and LR23 are connected with a lightning conductor, which leads the lightning current to the ground.

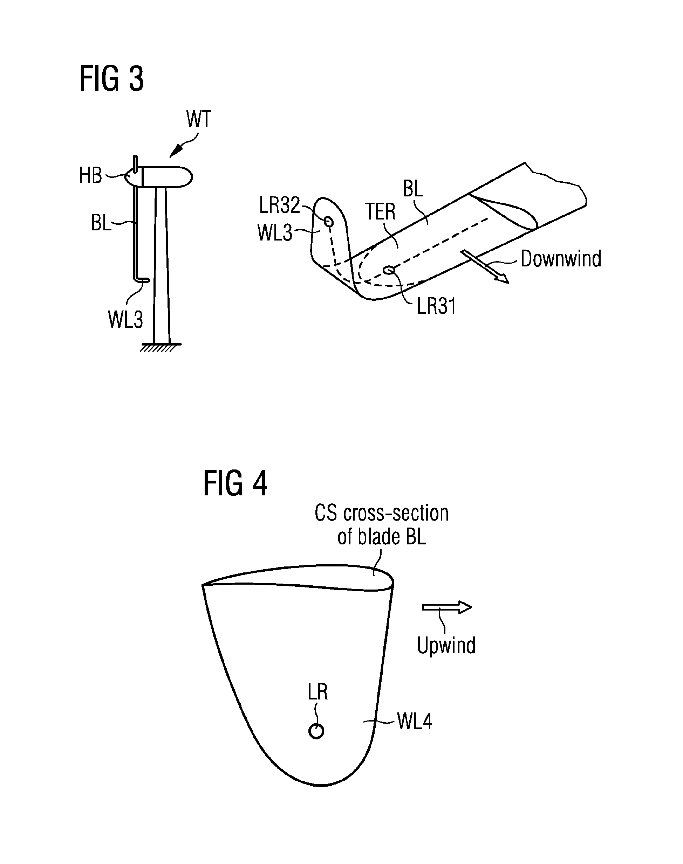

**FIG 3** shows a lightning protection according to the invention for a third winglet-type.

The blade BL turns around the hub HB of the wind turbine WT.

The blade BL is extended by a winglet WL3, which is arranged close to the tip end region TER of the blade BL.

The winglet WL3 is shaped as a one-sided winglet.

The winglet WL3 is oriented into the downwind-direction of the wind turbine WT, thus the winglet WL3 is called "one sided downstream winglet".

A lightning receptor LR31 is arranged close to the tip end region TER of the blade BL.

An additional lightning receptor LR32 is arranged asides the winglet WL3.

The position of this lightning receptor LR32 might be even close to the tip end region TER of the winglet WL3.

The lightning receptors LR31 and LR32 are connected with a lightning conductor, which leads the lightning current to the ground.

**FIG 4** shows a cross section CS of a tip end of a blade BL, which is connected with a one-sided winglet WL4.

The winglet WL4 is oriented in an upstream direction of the blade BL, thus for FIG 4 reference is made to FIG 1.

Preferably the winglet WL4 shows one dedicated lightning receptor LR.

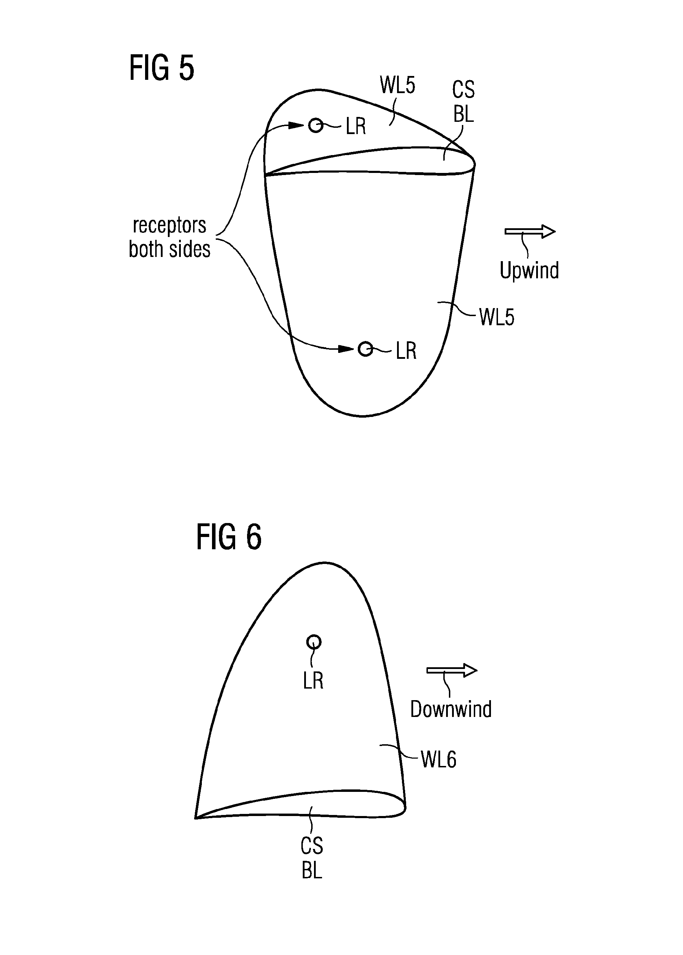

**FIG 5** shows a cross section CS of a tip end of a blade BL, which is connected with a two-sided winglet WL5.

The winglet WL5 is asymmetric and is oriented due to its shape more into the upstream direction than into the downstream direction of the blade BL.

Thus for FIG 5 reference can be made to FIG 2 correspondingly.

Preferably each portion (side) of the winglet WL5 show one dedicated lightning receptor LR. Thus a number of two lightning receptors LR are used and are arranged asides the winglet WL5.

**FIG 6** shows a cross section CS of a tip end of a blade BL, which is connected with a one-sided winglet WL6.

The winglet WL6 is oriented in a downstream direction of the blade BL.

Thus for FIG 6 reference is made to FIG 3.

Preferably the winglet WL6 shows one dedicated lightning receptor LR.

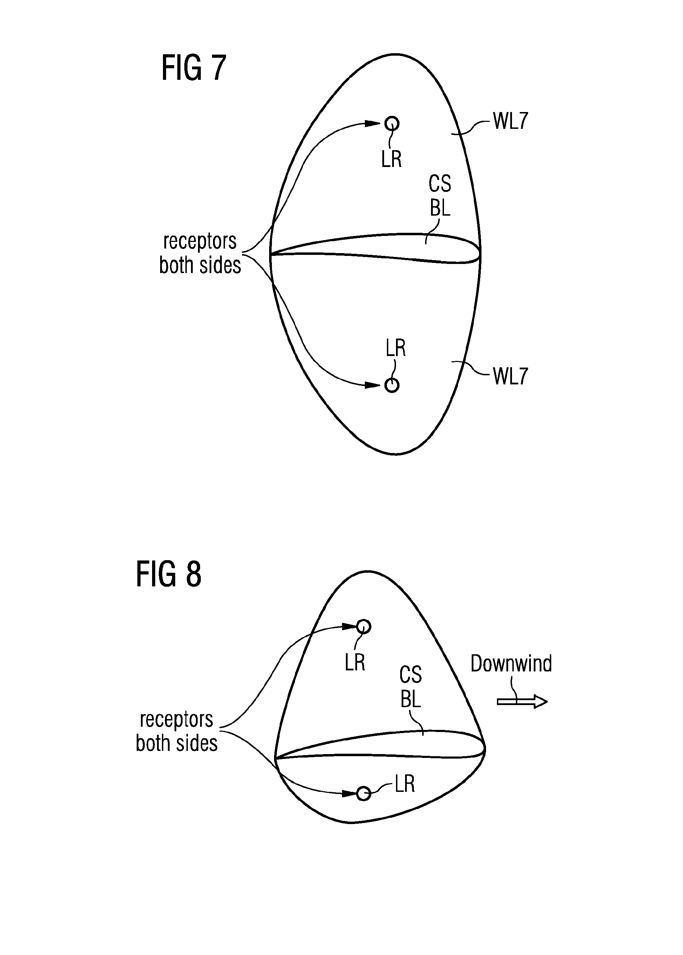

**FIG 7** shows a cross section CS of a tip end of a blade, which is connected with a two-sided winglet WL7.

The winglet WL7 is symmetric and is oriented due to its shape into the upstream direction as well as into the downstream direction of the blade BL.

Thus for FIG 7 reference is made to FIG 2.

Preferably each portion (side) of the winglet WL7 show one dedicated lightning receptor LR. Thus a number of two lightning receptors are used and are arranged asides the winglet WL7.

**FIG 8** shows a cross section CS of a tip end of a blade BL, which is connected with a two-sided winglet WL8.

The winglet WL8 is asymmetric and is oriented due to its shape more into a downstream direction of the blade BL than into the upstream direction of the blade BL.

Thus for FIG 8 reference can be made to FIG 2 correspondingly.

Preferably each portion (side) of the winglet WL8 show one dedicated lightning receptor LR. Thus a number of two lightning receptors are used and are arranged asides the winglet WL8.

## Claims

1. Arrangement for lightning protection of a wind turbine blade,
- where the blade of the wind turbine is extended by a shaped winglet,
- where the blade contains a lightning receptor, which is arranged at the tip end region of the blade,
- where the winglet contains an additional lightning receptor.

2. Arrangement according to claim 1, where the lightning receptors are placed at the winglet and/or at the blade at regions, where negative pressure-vortexes are generated.

3. Arrangement according to claim 1 or claim 2, where the lightning receptors are placed at the tip end region of the winglet and/or of the blade.

4. Arrangement according to one of the claims 1 to 3, where the lightning receptors are placed into an opening of the winglet and/or blade.

5. Arrangement according to one of the claims 1 to 4, where the lightning receptors are an integrated part of the winglet and/or of the blade, while the winglet/blade is manufactured.

6. Arrangement according to one of the claims 1 to 4, where the winglet is arranged at a tip end region of the blade.

7. Arrangement according to one of the claims 1 to 6, where the winglet is connected with the blade in a fixed but removable manner.

8. Arrangement according to one of the claims 1 to 7, where the lightning receptors are connected with a lightning conductor, which leads the lightning current to the electrical ground of the wind turbine.

9. Arrangement according to one of the claims 1 to 8, where the winglet is shaped and arranged
- as one-sided winglet, which is oriented into the upstream or into the downstream of the blade, or
- as two-sided winglet, which is oriented into the upstream and into the downstream of the blade, while the two-sided winglet is shaped as symmetrical or unsymmetrical winglet.

10. Arrangement according to one of the claims 1 to 9,
- where the lightning receptor of the blade or of the winglet contains a first and a second surface,
- where the first surface of the lightning receptor is arranged at a first surface of the blade or winglet,
- where the second surface of the lightning receptor is arranged at a second surface of the blade or winglet,
- where the first and the second surface of the lightning receptor is designed and arranged in a way, that each surface is able to receive a lightning strike.
